(19) **Europäisches Patentamt / European Patent Office / Office européen des brevets**

(11) **EP 1 978 744 A1**

(12) **EUROPEAN PATENT APPLICATION**

(43) Date of publication:
**08.10.2008 Bulletin 2008/41**

(51) Int Cl.:
**H04N 7/26** (2006.01)　　**H04N 7/36** (2006.01)

(21) Application number: **07290410.5**

(22) Date of filing: **04.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
 • **Boisson, Guillaume**
  **35000 Rennes (FR)**
 • **Francois, Edouard**
  **35890 Bourg des Comptes (FR)**
 • **Burdin, Nicolas**
  **75019 Paris (FR)**

(74) Representative: **Blot, Philippe Robert Emile et al**
 **Cabinet Lavoix**
 **2, place d'Estienne d'Orves**
 **75441 Paris Cedex 09 (FR)**

(54) **Temporal coding/decoding process and coder and decoder associated**

(57) The invention concerns a temporal coding process of a video sequence comprising the following steps:
a) selecting (52) at least one group of frames in the video sequence;
c) computing (62) frames from the frames of the selected group of frames (53);
d) selecting a group of frames among the computed frames;
e) repeating (49, 65) steps c) and d) until a level n of temporal decomposition equal to N;
f) coding (50B, 66B) some of the computed frames;

characterised in that it comprises an initial phase (33) comprising a step of selecting (32) an initial group of frames (34) including $3.2^N-1$ original frames, and a step of performing steps c) to f) on this initial group of frames (34).

The invention also relates to a coder, a decoder and a decoding process associated.

FIG.6

**Description**

The invention belongs to video coding domain using Motion-Compensated Temporal Filtering (MCTF) process.
Specifically, the present invention relates to a temporal coding process of a video sequence in the form of a bit stream to be transmitted to a decoder, the video sequence comprising a succession of original frames temporally placed one after another according to a predefined order, the temporal coding process comprising a functioning phase comprising the following successive steps:

a) selecting at least one group of frames in the video sequence, the selected group of frames including $2^N$ original frames, N being an integer;
b) setting a level n of temporal decomposition equal to 0;
c) computing frames from the frames of the selected group of frames, the computation being performed successively following the order of the frames in the selected group of frames;
d) selecting a group of frames among the computed frames;
e) incrementing the level n of temporal decomposition from 1 unit;
f) repeating steps c) to e) until the level n of temporal decomposition is equal to N;
g) coding in the form of a bit stream at least one frame computed at step c).

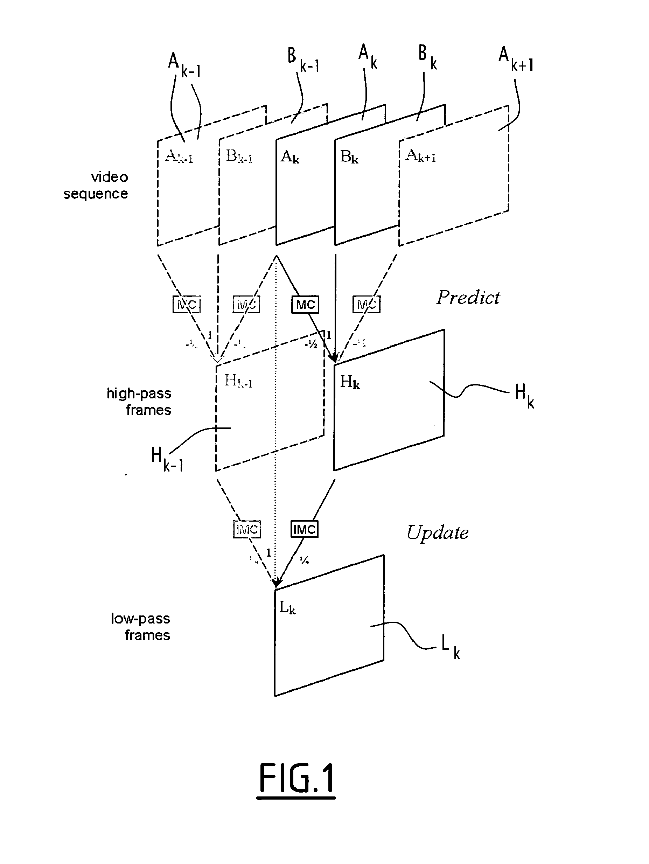

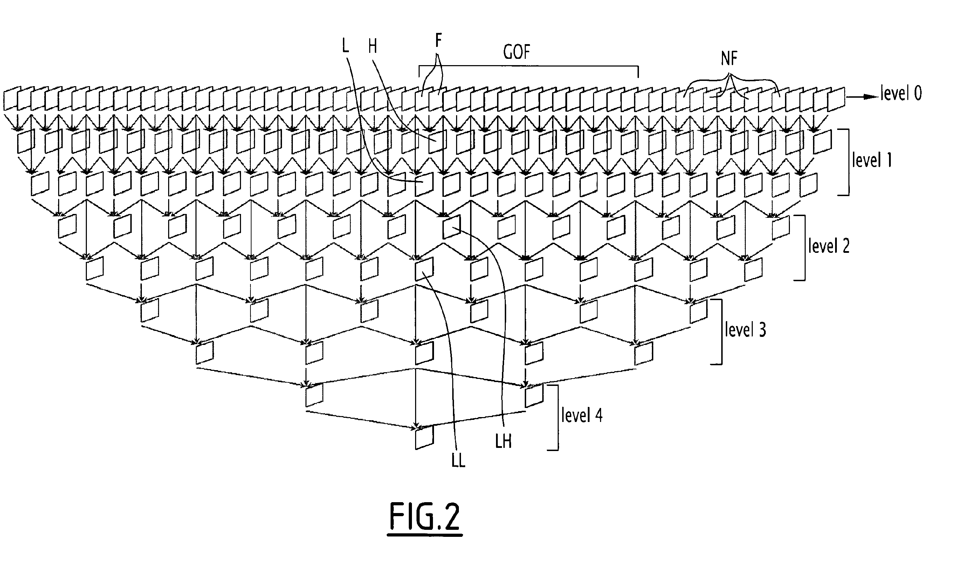

Frames of a video sequence, hereafter called original frames, are usually gathered into Groups Of Frames (GOF) to be encoded in order to reduce the amount of information to transmit to the decoder by using the temporal redundancy existing between successive frames of the GOF. Note, that the actual storage and processing capacities do not allow to process in once the entire frames of a motion picture film.
In each GOF, the frames are temporally placed one in a relation to the other according to a predefined order. The GOF are also temporally placed one in relation to the other according to a predefined order in the video sequence.
The MCTF process is a process employed to compress the temporal redundancy of each GOF.
Usually, the MCTF process is implemented following a lifting scheme. The lifting scheme consists in one or several lifting stages. Each lifting stage comprises a predict step then an update step. During the predict step, computations are carried out on the original frames of the GOF in order to get temporal high frequency frames H. During the update step, computations are performed on the temporal high frequency frames H computed and on the original frames to get temporal low frequency frames L in the form of a bit stream.
Some of these high and low frequency frames as well as motion fields MF estimated between each pair of original frames are necessary to reconstruct the frames of the video sequence and are consequently transmitted to the decoder.
The well known "5/3" filtering can for example be implemented with one lifting stage.
The "5/3" filtering allows turning a pair of frames $A_k$ and $B_k$ into one highfrequency frame $H_k$ and one lowfrequency frame $L_k$. Each temporal high frequency frame $H_k$ is computed using three successive original frames $A_k$, $B_k$, $A_{k+1}$ whereas each temporal low frequency frame $L_k$ is computed using an original frame $A_k$ and two successive temporal high frequency frames $H_{k-1}$, $H_k$, therefore involving five successive original frames noted $A_{k-1}$, $B_{k-1}$, $A_k$, $B_k$, $A_{k+1}$, as shown in figure 1. Figure 2 shows in black line a lifting scheme obtained from the implementation of the "5/3" filtering on a GOF of 16 frames F.
As illustrated in figure 2, a predict step uses one odd frame of the GOF and both even frames surrounding temporally said odd frame to produce a high frequency frame H. An update step uses an original even frame of the GOF and both high frequency frames H surrounding temporally said original even frame in order to provide low frequency frames L. Generally, a predict step is followed by an update step.
The high H and the low L frequency frames thus computed constitute the level 1 of the temporal decomposition of the lifting scheme, hereafter named level 1. The predict step is then performed on the low frequency frames L of level 1 to obtain high frequency frames LH of level 2. The update step is performed on the high frequency frames LH of level 2 and on the low frequency frames L of level 1 to obtain low frequency frames LL of level 2.
This process gets on with computing until level N=4, as shown in figure 2. Usually, in a coding scheme, each GOF includes $2^N$ original frames for a number N of levels of temporal decomposition (e.g. when N=4, the GOF comprises $2^N=16$ frames).
When a "5/3" filtering is implemented, three frames are necessary to perform a complete predict step and the two previous frames are also involved in the computation to complete the update step as shown in Figure 1.
However, on the borders of the GOF, it happens that every of these three or two frames is not available for each predict or update steps. Consequently, the decoded frames present imperfections because the high and the low frequency frames placed at the boundary of the GOF are not computed with the whole needed frames.
To prevent these imperfections on the decoded frames, a number of frames superior to the number of frames of the GOF have to be used to compute the high and the low frequency frames. The frames NF which would be necessary to code properly the GOF are represented in light grey in figure 2. When N denotes the number of temporal levels of MCTF process; in addition to the $2^N$ frames of the GOF, $2^{N+1}-2$ further frames of the past, as well as $2^N-1$ frames of the future are needed to code correctly the GOF.

However, this solution requires a large memory space and a large amount of computations.

It is therefore desirable to develop a new temporal coding process and a corresponding coder adapted to code a video sequence without imperfection after decoding, which requires less computation steps and less memory space.

Accordingly, it is an object of the invention to provide a temporal coding process type and a coder as recited in claims 1 and 6.

It is also an object of the invention to provide a temporal decoding process and a corresponding decoder as recited in claims 7 and 10.

Other features of the method and the devices are further recited in the dependent claims.

Thus other aspects of the invention will be apparent from the following description and drawings upon which:

- Figure 1 is a schematic representation of a known lifting implementation of a "5/3" filtering on 5 frames;
- Figure 2 is a schematic representation of a known lifting implementation of a "5/3" filtering on a GOF comprising 16 frames;
- Figure 3 is a schematic representation of a coder of the invention;
- Figure 4 is a schematic representation of a decoder of the invention;
- Figure 5 is a schematic representation of the lifting implementation of a "5/3" filtering with a number of temporal decomposition equal to 2 on a initial sequence of a video according to a coding/decoding process of the invention;
- Figure 6 is a flow chart of the coding process of the invention;
- Figure 7 is a representation similar to the representation illustrated in Figure 5 on a middle-GOF of the video;
- Figure 8 is a representation similar to the representation illustrated in Figure 5 on a penultimate GOF of the video;
- Figure 9 is a representation similar to the representation illustrated in Figure 5 on an ultimate GOF of the video; and
- Figure 10 is a flow chart of the decoding process of the invention.

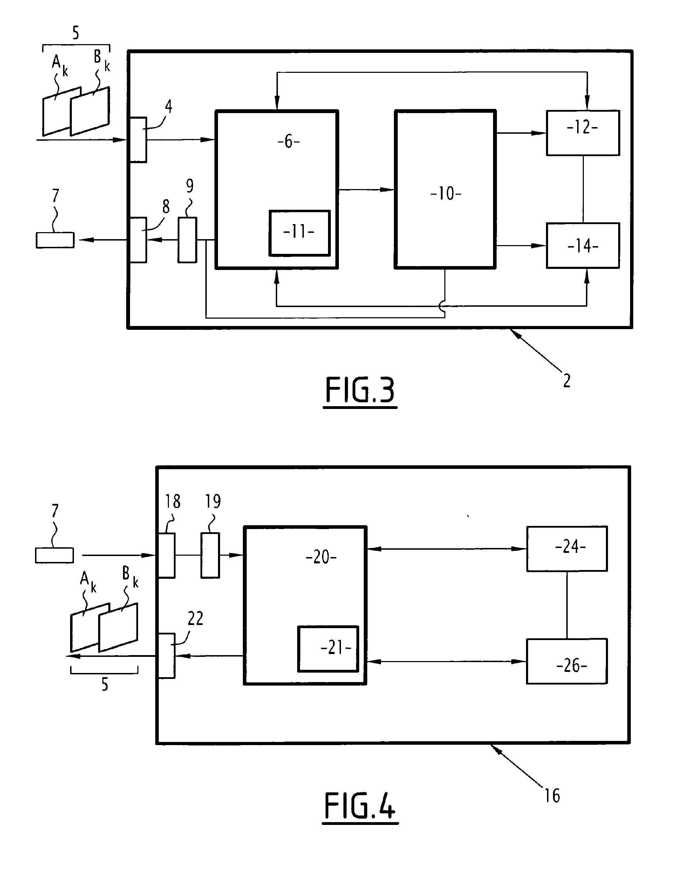

Referring to figure 3, a coder 2 of the invention is illustrated.

The coder 2 comprises an input 4 for receiving a video sequence 5, a control unit 6 connected to the input 4, a coder block 9 connected to the control unit 6, and an output 8 linked to the block 9.

The video sequence 5 contains a succession of original frames $A_k$, $B_k$ temporally placed according to a predefined order and gathered into Groups Of Frames i.e. GOF.

The control unit 6 includes a memory 11.

The control unit 6 is adapted to select consecutive groups of original frames so that selected groups follow the frames order in the video sequence 5. The control unit 6 is also adapted to select frames selected among computed frames and to transmit them to the coder block 9 to be coded.

The coder block 9 is able to code the frames received from the control unit 6 as well as motion fields MF in the form of a bit stream 7 and to transmit this one to the output 8.

The output 8 is adapted to send the bit stream 7 to a decoder 16 illustrated in figure 4. In the bit stream 7, the groups of coded frames are arranged according to a defined order. To each group of original frames corresponds a group of coded frames which is sent in the form of a bit stream part to the decoder 16 according to an order corresponding to the order of the groups of frames in the video sequence. For example, a first part of the bit stream represents the first group of coded frames resulting from the coding of the first selected group of original frames.

The coder 2 further contains a motion estimation block 10 linked to the control unit 6 and to the coder block 9, an analysis high pass filter 12 and an analysis low pass filter 14 connected together, to the motion estimation block 10 and to the control unit 6.

The motion estimation block 10 is able to compute one motion field MF between each pair of successive frames, using a well known motion estimation method, e.g. a block matching method. The motion field MF represents the motion of one frame in relation to the other one.

To this end, frames are analyzed by the block 10 according to their order in the video sequence 5.

Specifically, the motion estimation block 10 is adapted to compute for each set of three original frames of the GOF a backward motion field MF estimated between frames $B_k$, and $A_k$, as well as a forward motion field between frames $B_k$, and $A_{k+1}$.

The block 10 is also able to compute motion fields MF between low frequency frames $L_{2k}$, $L_{2k+1}$, $L_{2k+2}$ of level 1 (low frequency frames of level n<N) in order to compute the high and the low frequency frames of level 2 (level n+1).

A motion field MF consists in several motion vectors that represent the displacements between blocks of a given frame in regards with a reference frame. In this case, each vector represents the motion of one block from one frame to another one. These blocks can have a size of 4x4, 8x8, 16x16, 32x32 pixels, up to covering the size of the whole image.

The motion estimation block 10 is adapted to send the estimated motion fields MF to the filters 12 and 14 and to the coder block 9.

The filters12 and 14 are able to apply motion compensation operators MC and respectively IMC using the motion fields MF and respectively the corresponding inverse motion fields.

The analysis high pass filter 12 is a computing unit able to carry out the predict step of the "5/3" filtering on the video sequence 5. To this end, the analysis high pass filter 12 is adapted to apply a motion compensation operator MC on the appropriate frames as depicted on figure 1, e.g. on $A_k$, in order to generate motion compensated frames. Afterwards, the analysis high pass filter 12 is adapted to compute high frequency frames $H_k$ of level 1 by applying the following predict equation (1a):

$$H_k = B_k - \frac{MC_{A_k \leftarrow B_k}(A_k) + MC_{B_k \rightarrow A_{k+1}}(A_{k+1})}{2} \qquad \text{(predict equation 1a)}$$

Where:

- $H_k$ is a high frequency frame of level 1,
- $A_k$ is a k-th even original frame,
- $B_k$ is a k-th odd original frame subsequent to the frame $A_k$,
- $A_{k+1}$ is a k+1-th even original frame subsequent to the frame $B_k$, and
- $MC_{A_k \leftarrow B_k}(A_k)$ is the motion compensated frame $A_k$ using a backward motion field estimated between $A_k$ and $B_k$, and
- $MC_{B_k \rightarrow A_{k+1}}(A_{k+1})$ is the motion compensated frame $A_{k+1}$ using a forward motion field estimated between $B_k$ and $A_{k+1}$.

The analysis low pass filter 14 is a computing unit 14 adapted to perform the update step of the "5/3" filtering on the video sequence 5. To this end, the analysis low pass filter 14 is adapted to apply on the appropriate frames as depicted on figure 1, e.g. on $H_k$, a motion compensation operator IMC. Afterwards, the analysis low pass filter 14 is adapted to compute low frequency frames $L_k$ by applying following update equation (1 b):

$$L_k = A_k + \frac{IMC_{B_{k-1} \rightarrow A_k}(H_{k-1}) + IMC_{A_k \leftarrow B_k}(H_k)}{4} \qquad \text{(update equation 1b)}$$

Where:

- $H_k$, $H_{k-1}$, are a k-th even and respectively a k-1-th odd high frequency frames of level 1, they are obtained from the predict equation 1 a),
- $A_k$ is a k-th even original frame,
- $B_k$ is a k-th odd original frame subsequent to the frame $A_k$,
- $B_{k+1}$ is a k+1-th odd original frame subsequent to the frame $A_{k+1}$,
- $IMC_{A_k \leftarrow B_k}(H_k)$ is the motion compensated frame $H_k$ using a backward motion field estimated between $A_k$ and $B_k$,
- $IMC_{B_{k-1} \rightarrow A_k}(H_{k-1})$ is the motion compensated frame $H_{k-1}$ using an inverse forward motion field estimated between $B_{k-1}$ and $A_k$.

The analysis filters 12 and 14 are also adapted to compute high frequency frames and low frequency frames of further levels. For example, the filters 12 and 14 are able to compute the high frequency frames $LH_k$ and the low frequency frames $LL_k$ of level 2 taking frames $\{L_{2k}, L_{2k+1}\}$ as new input instead of $\{A_k, B_k\}$, and using the following equations:

$$LH_k = L_{2k+1} - \frac{MC_{L_{2k} \leftarrow L_{2k+1}}(L_{2k}) + MC_{L_{2k+1} \rightarrow L_{2k+2}}(L_{2k+2})}{2} \qquad \text{(predict equation 2a)}$$

$$LL_k = L_{2k} + \frac{IMC_{L_{2k-1} \to L_{2k}}(LH_{k-1}) + IMC_{L_{2k} \leftarrow L_{2k+1}}(LH_k)}{4} \qquad \text{(update equation 2b)}$$

Where:

- $LH_{k-1}$, $LH_k$ are two successive high frequency frames of level 2,
- $L_{2k}$, $L_{2k+2}$ are even low frequency frames of level 1,
- $L_{2k-2}$, $L_{2k+1}$ are odd low frequency frames of level 1,
- $LL_k$ is a low frequency frame of level 2,
- $MC_{L_{2k} \leftarrow L_{2k+1}}$ $(L_{2k})$ is the motion compensated frame $L_{2k}$ using a backward motion field estimated between $L_{2k}$ and $L_{2k+1}$,
- $MC_{L_{2k+1} \to L_{2k+2}}$ $(L_{2k+2})$ is the motion compensated frame $L_{2k+2}$ using a forward motion field estimated between $L_{2k+1}$ and $L_{2k+2}$
- $IMC_{L_{2k-1} \to L_{2k}}$ $(LH_{k-1})$ is the inverse motion compensated frame $LH_{k-1}$ using a forward motion field estimated between $L_{2k-1}$ and $L_{2k}$, and
- $IMC_{L_{2k} \leftarrow L_{2k+1}}$, $(LH_k)$ is the inverse motion compensated frame $LH_k$ using a backward motion field estimated between $L_{2k}$ and $L_{2k+1}$,

When the frames are split up in blocks, equations (1a, 1b, 2a, 2b) are iteratively applied on each of these blocks using the corresponding motion compensation operators MC and the corresponding inverse motion compensation operators IMC.

Referring to figure 4, the decoder 16 of the invention is illustrated.

The decoder 16 comprises an input 18 for receiving the bit stream 7 which represents the coded video sequence, a decoder block 19 linked to the input 18, a control unit 20 connected to the decoder block 19 and an output 22 for outputting reconstructed frames $A_k$, $B_k$ of the video sequence 5.

The decoder block 19 is adapted to decode the bit stream 7 to obtain the motion fields MF and decoded frames.

The control unit 20 includes a memory 21 and is linked to the output 22.

The decoder 16 further contains a synthesis low pass filter 24 and a synthesis high pass filter 26 connected together and to the control unit 20.

The synthesis filters 24 and 26 are reconstructing units adapted to operate motion compensation operators MC and IMC using the motion fields MF send from the coder 2.

Filters 24 and 26 are able to reconstruct low frequency frames and original frames from the decoded frames.

In particular, the synthesis low pass filter 24 is further adapted to reconstruct low frequency frames of even index $L_{2k}$ using high $LH_k$ and low $LL_k$ frequency frames of a higher level, and even original frames $A_k$ using high $H_k$ and low $L_k$ frequency frames. To this aim, it applies the following equations (3a, 3b):

$$L_{2k} = LL_k - \frac{IMC_{L_{2k-1} \to L_{2k}}(LH_{k-1}) + IMC_{L_{2k} \leftarrow L_{2k1}}(LH_k)}{4} \qquad \text{(equation 3a)}$$

$$A_k = L_k - \frac{IMC_{B_{k-1} \to A_k}(H_{k-1}) + IMC_{A_k \leftarrow B_k}(H_k)}{4} \qquad \text{(equation 3b)}$$

where the same notations as in equations 1a), 1b), 2a) and 2b) are used.

The synthesis high pass filter 26 is further adapted to reconstruct low frequency frame of odd index $L_{2k+1}$ using high frequency frames of the upper level and low frequency frames of the same level, and odd original frames $B_k$ using high frequency frames of the upper level, and from the original frames. To this aim, it applies following equations 4a) and 4b):

$$L_{2k+1} = LH_k + \frac{MC_{L_{2k} \leftarrow L_{2k+1}}(L_{2k}) + MC_{L_{2k+1} \rightarrow L_{2k+2}}(L_{2k+2})}{2} \quad \text{(equation 4a)}$$

$$B_k = H_k + \frac{MC_{A_k \leftarrow B_k}(A_k) + MC_{B_k \rightarrow A_{k+1}}(A_{k+1})}{2} \quad \text{(equation 4b)}$$

where the same notations as in equations 1a), 1b), 2a) and 2b) are used.

Filters 24 and 26 are adapted to process successively each group of coded frames according to the defined selection order of the groups of coded frames. In a defined group of coded frames, the even and the odd low frequency frames $L_{2k}$, $L_{2k+1}$, and the original frames $A_k$, $B_k$ are reconstructed according to a predefined order.

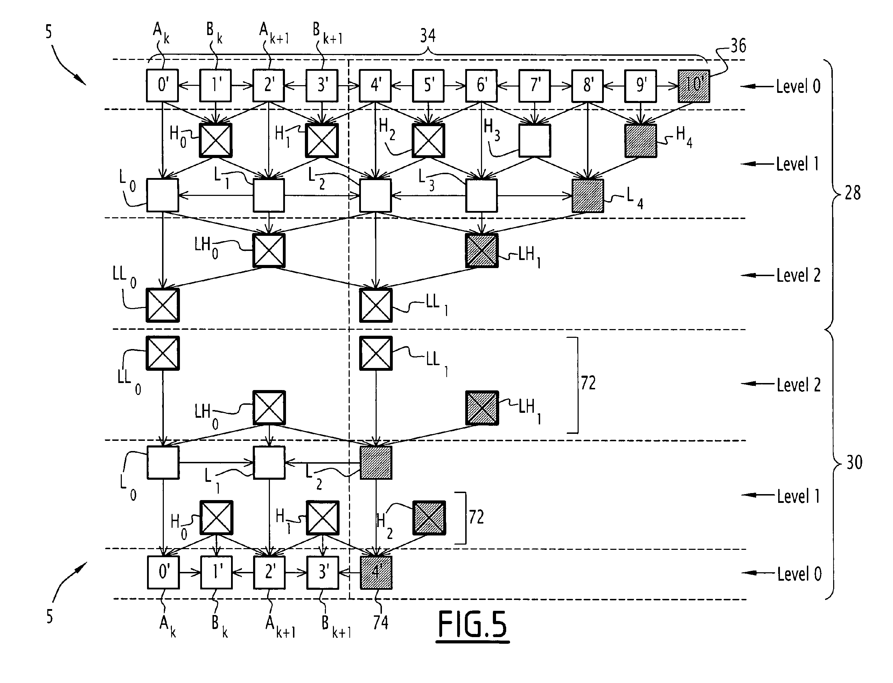

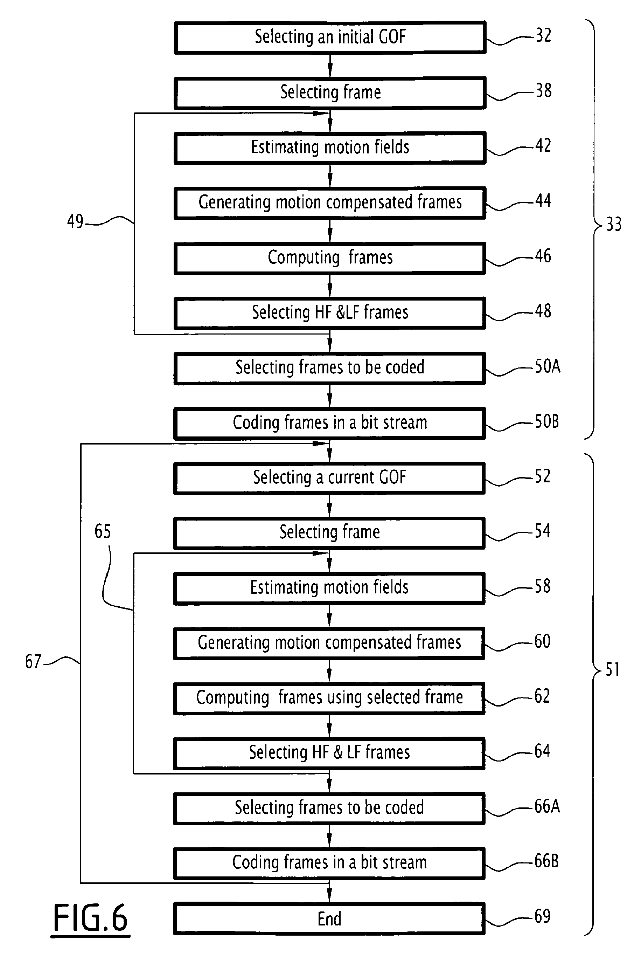

Temporal coding process will now be described in relation to figures 5 and 6.

The lifting implementation of the "5/3" filtering according to the coding process of the invention is illustrated on an analysis pyramidal structure 28 in figure 5.

In the embodiment of the invention illustrated in this figure, the video sequence 5 mainly comprises groups of frames GOF of $2^N = 4$ original frames and the analysis pyramidal structure 28 has N = 2 levels.

To facilitate the understanding of the invention, a number from 0' to 10' has been attributed to the original frames according to their order in the video sequence 5.

Each frame of the video sequence 5 having an even number has been noted $A_k$, $A_{k+1}$, $A_{k+2}$ and each frame of the video sequence having an odd number has been noted $B_k$, $B_{k+1}$, $B_{k+2}$ for the application of equations (1 a, 1 b) and (3a, 3b) in the following description.

Further, the low frequency frames and the high frequency frames of level 1 are referenced with an L and respectively an H in capital as well as an order index. The low frequency frames and the high frequency frames of level 2 are referenced with an LL and respectively an LH in capital as well as an order index.

As shown in figure 6, the temporal coding process begins with an initial phase 33. The initial phase comprises steps 32 to 50B.

At step 32, the control unit 6 selects an initial GOF 34 comprising $3 \times 2^N - 1 = 11$ original frames in the video sequence 5, numbered 0' to 10' in figure 5. The letter "n" is the level of temporal decomposition of the pyramidal structure. It varies between 1 and N where N is the maximal level of temporal decomposition (in the described embodiment N=2).

According to the invention, the initial GOF 34 is a particular GOF because it is the only one which does not comprise $2^N = 4$ frames.

In step 38, the last frame 36 of the initial GOF is selected and stored in the memory 11.

The control unit 6 transmits all original frames $A_k$, $B_k$, $A_{k+1}$... of the GOF 34 to the analysis high pass filter 12 and the even original frames $A_k$, $A_{k+1}$, of the GOF 34 to the analysis low pass filter 14.

Then, the original frames 34 of the GOF are filtered during steps 42 to 46.

To this end, the original frames are sent to the motion estimation block 10 which computes the motion fields MF between each odd frame $B_k$ and its direct neighbours $A_k$, $A_{k+1}$.

The block 10 transmits the motion fields MF computed to the analysis high pass filter 12, to the analysis low pass filter 14 and to the coder block 9.

At step 44, the analysis filter 12 applies on appropriate frames as depicted on figure 1, e.g. on $A_k$ and $A_{k+1}$, a motion compensation operator MC using the motion fields MF received from block 10 in order to generate motion compensated frames. At the same step, the analysis filter 14 applies on appropriate frames as depicted on figure 1, e.g. on $H_k$, $H_{k+1}$, a motion compensation operator IMC using inverse motion fields deduced from the motion fields MF received from block 10 in order to generate motion compensated frames $MC_{A_k \leftarrow B_k}(A_k)$ , $MC_{B_k \rightarrow A_{k+1}}(A_{k+1})$.

At step 46, the analysis high pass filter 12 computes $3 \times 2^{(N-n)} - 1 = 5$ high frequency frames $H_0$, $H_1$, $H_2$... using the predict equation (1 a). This implies using motion compensated frame generated at step 44.

The analysis high pass filter 12 then transmits these five high frequency frames $H_0$, $H_1$... computed to the analysis low pass filter 14 and to the control unit 6.

Filter 12 is applied on a subgroup of three frames, then filter 14 is applied on the computed frames $H_0$, $H_1$, and the original frames $A_{k+1}$. Afterward, filter 12 is applied on the following subgroup of three frames then filter 14 until the last frame of the GOF.

The analysis low pass filter 14 computes $3 \times 2^{(N-n)} - 1 = 5$ low frequency frames $L_0$, $L_1$, $L_2$... using the update equation (1b). This implies using motion compensated frame generated at step 44.

The analysis low pass filter 14 then sends these five low frequency frames $L_0$, $L_1$... computed to the control unit 6.

At step 48, the control unit 6 selects and stores the last high frequency frame $H_4$ and the last low frequency frame $L_4$ in the memory 11.

Thus, the level n=1 of the initial GOF 34 has been computed. It comprises $2(3 \times 2^{(N-n)}-1 = 10$ filtered frames.

Thereafter, at step 49 the level n=2 of the initial GOF 34 is computed. To this end, the five low frequency frames $L_0$, $L_1$, $L_2$ of level 1 are selected, and steps 42 to 48 are repeated on these five low frequency frames $L_0$, $L_1$, $L_2$... and on the even original frames $A_k$ using the predict 2a) and the update 2b) equations.

To this end, the control unit 6 transmits the five low frequency frames $L_0$, $L_1$, $L_2$,... computed at step 46 to the analysis high pass filter 12 and the first two even low frequency frames $L_0$ and $L_2$ to the analysis low pass filter 14.

The control unit 6 also sends these low frequency frames to the block 10 which computes motion fields MF between these frames as already done for the original frames $A_k$, $B_k$ during the first step 42.

The block 10 transmits the motion fields MF to the analysis high pass filter 12, to the analysis low pass filter 14 and to the coder block 9.

At step 46, the analysis high pass filter 12 computes $3 \times 2^{(N-n)}-1 = 2$ high frequency frames $LH_0$, $LH_1$ by using the predict equation (2a). The analysis high pass filter 12 transmits the computed frames $LH_0$, $LH_1$ to the analysis low pass filter 14 and to the control unit 6.

The analysis low pass filter 14 computes $3 \times 2^{(N-n)}-1 = 2$ low frequency frame $LL_0$, $LL_1$ and transmits them to the control unit 6.

At step 48, the control unit 6 selects and stores the last high frequency frame $LH_1$.

The control unit 6 selects the first $2^{(N-n)}+1 = 3$ high frequency frames $H_0$, $H_1$, $H_2$ , all (=2) low frequency frames ($LL_0$ and $LL_1$) and high frequency frames of level 2 ($LH_0$ and $LH_1$) and transmits them to the coder block 9 at step 50A.

At step 50B, the coder block 9 codes the frames received from the control unit 6 and the motion fields MF of the initial GOF 34 into a part of the bit stream 7 in order to be sent to the decoder 16 through the output 8.

The level 2 of the initial GOF 34 comprises $3 \times 2^{(N-n)} -1 = 2$ high frequency frames $LH_0$, $LH_1$ and $3 \times 2^{(N-n)} -1 = 2$ low frequency frames $LL_0$, $LL_1$.

If n represents the number of the level of temporal decomposition of the analysis pyramidal structure, each level of the initial GOF comprises $3 \times 2^{N-n+1}-1$ filtered frames.

The process then continues with a functioning phase 51 comprising steps 52 to 67.

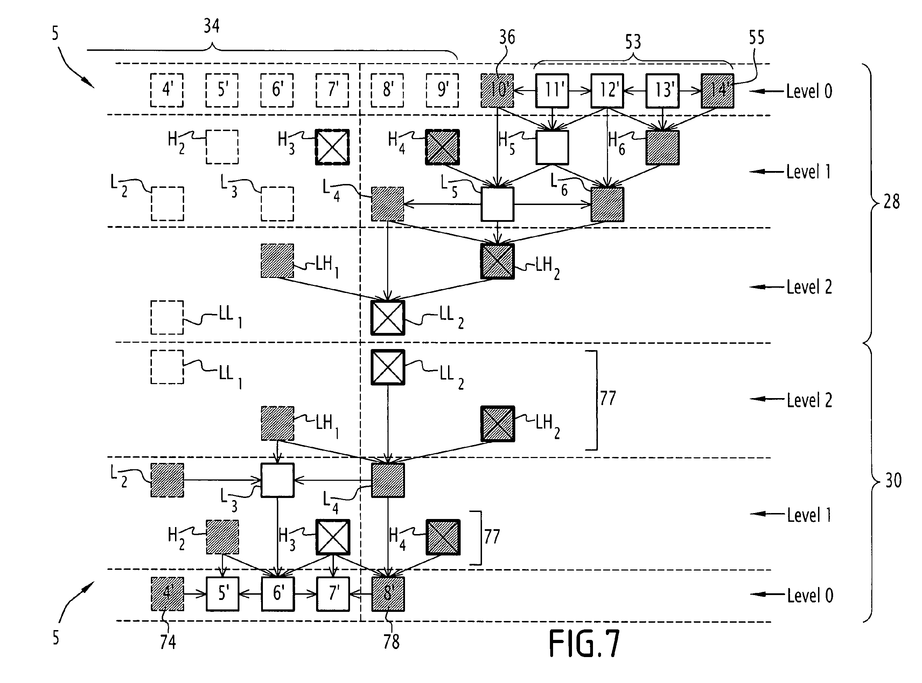

The functioning phase 51 begins with a step 52 of selecting a current GOF 53. This GOF 53 follows the GOF 34. It comprises $2^N$ original frames which are illustrated by four original frames numbered from 11' to 14' in figure 7.

At step 54, the control unit 6 stores the last frame 55 of the GOF 53. This frame 55 is numbered 14' in figure 7.

Then, the GOF 53 is filtered.

To this end, the control unit 6 transmits to the motion estimation block 10 at first the frame 36 stored at step 38 followed by the frames of the GOF 53.

The control unit 6 also transmits the frame 36 followed by the frames of the GOF 53 to the analysis high pass filter 12, and the last high frequency frame $H_4$ of level 1 to the analysis low pass filter 14.

At step 58, the block 10 computes the motion fields between the original frames received from the control unit 6. Then, the block 10 transmits the motion fields MF to the analysis high pass filter 12, to the coder block 9, as well as to the analysis low pass filter 14.

At step 60, the filters 12 and 14 generate motion compensation operators MC and respectively inverse motion compensation operators IMC from the motion fields MF.

At step 62, the analysis high pass filter 12 computes the high frequency frames $H_5$ and $H_6$ from the original frames received from the control unit 6 using equation (1a). The analysis high pass filter 12 then transmits these high frequency frames to the analysis low pass filter 14 and to the control unit 6.

The analysis low pass filter 14 computes two low frequency frames $L_5$, $L_6$ from the two high frequency frames received from the analysis high pass filter 12 and from the high frequency frame $H_4$ selected at step 48 using equation (1 a).. The analysis high pass filter 12 then transmits the low frequency frames $L_5$, $L_6$ to the control unit 6.

At step 64, the control unit 6 selects and stores the last high frequency frame $H_6$ and the last low frequency frame $L_6$ in the memory 11.

Thereafter, at step 65 the two low frequency frames $L_5$, $L_6$ of the level 1 and the low frequency frames $L_4$ stored at step 48 are selected and steps 58 to 64 are repeated on these three low frequency frames $L_5$, $L_6$.

The control unit 6 transmits the low frequency frames $L_4$, $L_5$, $L_6$ to the block 10 and to the analysis high pass filter 12, and the frequency frames $LH_4$ stored at step 48, to the low pass filter 14.

The block 10 computes the motion fields MF between these frames at step 58. The block 10 transmits them to the analysis high pass filter 12, as well as to the analysis low pass filter 14 and to the coder block 9.

At step 60, the motion compensated frames $MC_{L_{2k} \leftarrow L_{2k+1}} (L_{2k})$ $MC_{L_{2k+1} \rightarrow L_{2k+2}} (L_{2k+2})$, and the inverse motion compensated frames $IMC_{L_{2k-1} \rightarrow L_{2k}} (LH_{k-1})$ $IMC_{L_{2k} \leftarrow L_{2k+1}} (LH_k)$ are generated by the filters 12 and 14 using motion fields MF.

Step 62 is performed to get a high frequency frame $LH_2$ of level 2 which is transmitted to the analysis low pass filter 14 and to the control unit 6. A low frequency frame $LL_2$ of level 2 is also obtained and sent to the control unit 6.

The high frequency frame $LH_2$ is selected and stored in memory 11 at step 64.

At step 66A, the last computed high $LH_2$ and low $LL_2$ frequency frames of level 2 as well as the high frequency frames $H_3$, $H_4$ of level 1 computed during step 44, are selected and are sent to the coder block 9.

At step 66B, the coder block 9 codes the frames selected at step 66A and the motion fields of the second GOF 53 into a bit stream 7 to be transmitted.

At step 67, the process of the invention return to step 52 and steps 52 to 66B are repeated for the subsequent GOF 68 until the fast frame of the video sequence 5. Then, the coding process ends at step 69.

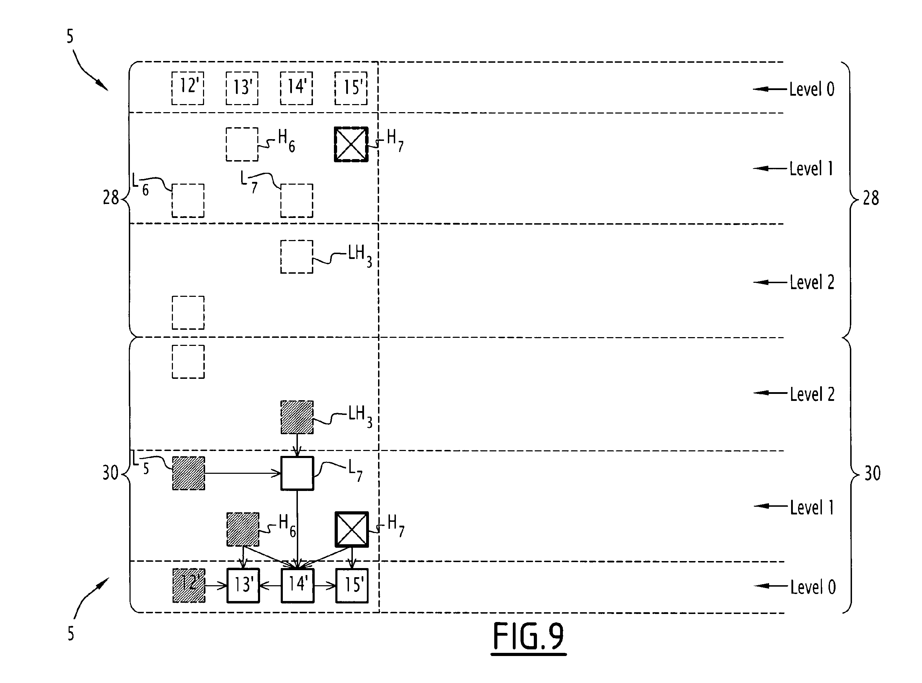

During the last step 66A, only the high frequency frames $H_7$ of level 1 computed during the preceding step 62 is sent to the coder block 9, as shown in figure 9.

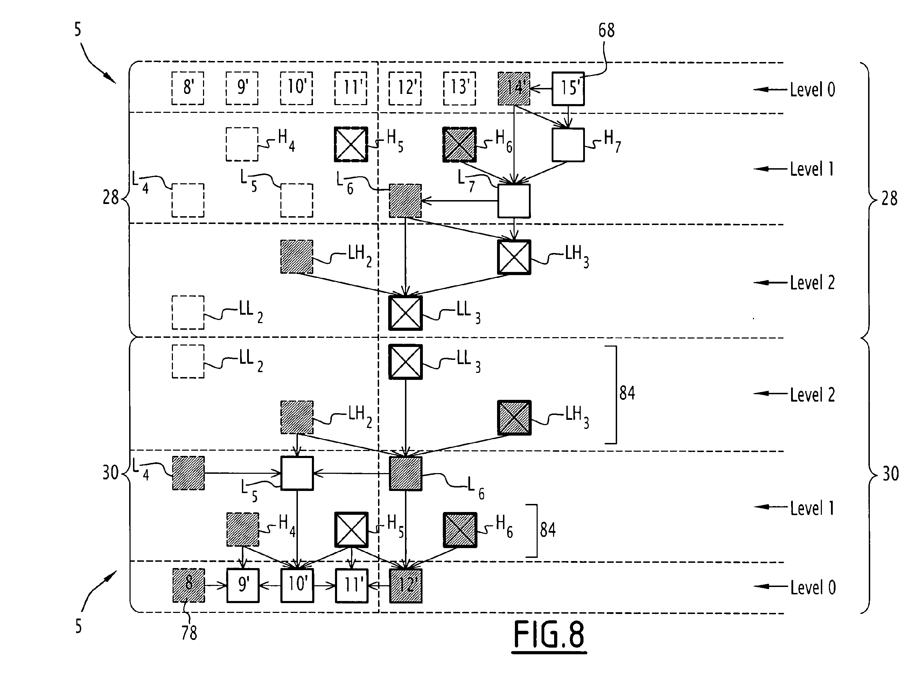

During the last repeat of steps 58 to 66B, the predict and the update steps are sometimes performed on less than three and less than two frames, as shown in figures 8 and 9.

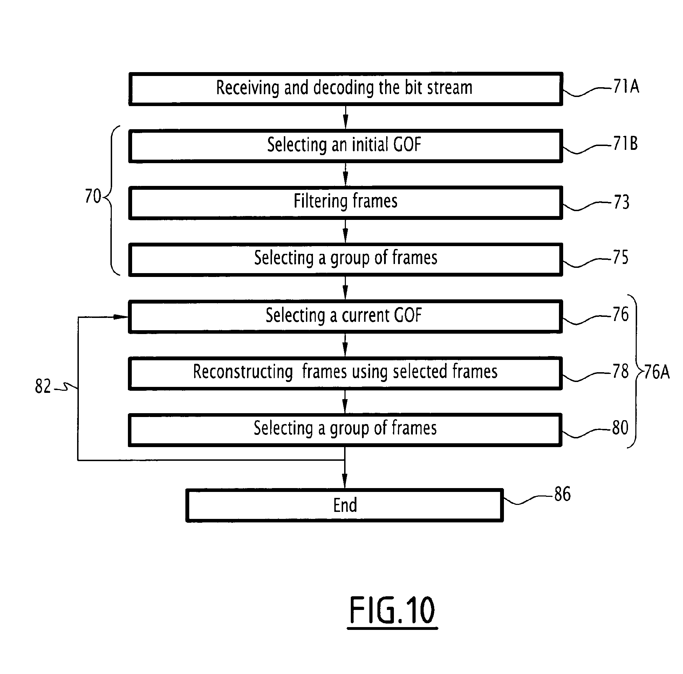

Temporal decoding process will now be described in relation to figures 5 to 10. The lifting implementation of the "5/3" filtering according to the decoding process is illustrated on a synthesis pyramidal structure 30 in figure 5.

The decoding process begins with a step 71 A during which the bit stream 7 is received from the coder 2. The bit stream 7 is decoded by the decoder block 19 to obtain the decoded frames and the motion fields MF sent by the coder 2.

Then an initial phase 70 comprising steps 71 B to 75, is performed. At step 71 B, an initial GOF 72 is selected in the decoded frames. In the selected group of decoded frames, the decoded frames are arranged in a predefined order from the low to the high frequency and in a chronological order.

The initial GOF 72 contains decoded frames and specifically the frames obtained from the computing of the initial group of frames 34 that were coded at step 50B i.e. the first three high frequency frames $H_0$, $H_1$, $H_2$ of level 1, the first two high frequency frames $LH_0$, $LH_1$ of level 2 and the first two low frequency frames $LL_0$, $LL_1$ of level 2 as illustrated in Figure 5.

The control unit 20 transmits the high frequency frames of level 2 $LL_0$, $LL_1$, $LH_0$, $LH_1$ as well as motion fields MF to the synthesis low pass filter 24.

The control unit 20 sends the high frequency frame $LH_0$ and the motion fields MF to the synthesis high pass filter 26.

At step 73, the synthesis low pass filter 24 reconstructs a low frequency frame $L_0$ of level 1 from the first high $LH_0$ and the first low $LL_0$ frequency frames.

The synthesis low pass filter 24 also reconstructs a third low frequency frame $L_2$ of level 1 from the second low frequency frame $LL_1$ of level 2 and from the second $LH_0$ and the third $LH_1$ high frequency frames of level 2.

To this end, the synthesis low pass filter 24 uses equation 3a.

The synthesis low pass filter 24 transmits the low frequency frames $L_0$, $L_2$ computed at step 73 to the synthesis high pass filter 26.

The synthesis high pass filter 26 reconstructs the second low frequency frame $L_1$ from the first $L_0$, the third $L_2$ low frequency frames and the first high frequency frame $LH_0$. The synthesis high pass filter 26 uses to this end equation 4a.

The synthesis low pass filter 24 reconstructs the first original frames numbered 0' from the first low frequency frame $L_0$ and the first high frequency frame $H_0$. To this aim, it uses equations 3b.

In the same way, the synthesis low pass filter 24 computes the third original frames numbered 2' from the second low frequency frame $L_1$, the second $H_0$ and third $H_1$ high frequency frames.

It reconstructs the original frames 74 numbered 4' from the third low frequency frame $L_2$, and from the second $H_1$ and third $H_2$ high frequency frames of level 1.

The synthesis high pass filter 26 reconstructs the original image numbered 1' from the original frames numbered 0' and 2', and from the first high frequency frame of level 1 $H_0$. To this aim, it uses equation 4b.

In the same way, it reconstructs the original frames numbered 3' from the original frames numbered 2' and 4'.

At step 75, the control unit 20 selects and stores in memory 21 the last original frame 74, the last high $H_2$ frequency frame of level 1, the last low $L_2$ frequency frame of level 1 and the last low frequency frame $LH_1$ of level 2.

Now, a functioning phase 76A begins with a step 76 where the control unit 20 selects a current group 77 of frames and the motion fields MF generated from the coding of the second GOF 53.

The group of frames referenced 77 follows the group of frames 72 and comprises decoded frames. These frames correspond to the frames obtain from the temporal coding of the group of frames referenced 53.

The current group 77 comprises two high frequency frames $H_3$, $H_4$ of level 1 (placed after the first three high frequency frames $H_0$, $H_1$, $H_2$ selected at step 71 B), one high frequency frame $LH_2$ (placed after the first two high frequency frames $LH_0$, $LH_1$ selected at step 71 B), and one low frequency frame $LL_2$ (placed after the first two low frequency frames $LL_0$, $LL_1$ selected at step 71 B)

At step 78, the synthesis low pass filter 24 reconstructs the low frequency frame $L_4$ of level 1 from the low frequency frame $LL_2$, the high frequency frame $LH_2$ and the high frequency frame $LH_1$ selected at step 76.

To this end, it uses equation 3a and the motion fields MF estimated between low frequency frames $L_0$ of level 1 of the initial GOF 34 and the motion fields MF estimated between low frequency frames $L_0$ of level 1 of the GOF 53

Then, it transmits the low frequency frame $L_4$ to the synthesis high pass filter 26.

The synthesis high pass filter 26 reconstructs the low frequency frame $L_3$ and sends it to the synthesis low pass filter 24. The low frequency frame $L_3$ is computed from the low frequency frame $L_4$, from the high frequency frame $LH_1$ and from the low frequency frame $L_2$ selected at step 74.

The synthesis low pass filter 24 reconstructs original frames numbered 6' from the high frequency frame $H_2$ selected at step 74, from the high frequency frame $H_3$, from the low frequency frame $L_3$.

The synthesis high pass filter 26 reconstructs original frame numbered 5' from the high frequency frame $H_2$ and the original frame 74 all selected at step 74, and from original frame numbered 6'.

The synthesis low pass filter 24 reconstructs original frame 78 numbered 8' from the low frequency frame $L_4$ previously calculated, from the high frequency frame $H_3$ and $H_4$ received from the coder 2 and from the motion fields MF.

The synthesis high pass filter 26 reconstructs original frame numbered 7' from original frames numbered 6' and 8', and from the high frequency frame $H_3$.

At step 80, the control unit 20 selects and stores in the memory 21 the last original frames 78 which is here numbered 8', the last high $H_4$ and the last low $L_4$ frequency frames of level 1, and the last high frequency frame $LH_2$ of level 2.

At step 82, steps 76 to 80 are repeated for the next GOF 84. The functioning phase 76A i.e. steps 76 to 80 continues until the computation of the last original frame of the video sequence.

At the end of the video sequence (step 86), step 78 is only performed on the computed or original frames available, as visible in figure 9.

This process can also be implemented with a 9/7 filtering.

This process allows to temporally coding a video sequence with less operations because the already computed frames are stored in a memory and with less memory space because only a predefined number of chosen computed frames are stored in the memory.

Generally, steps 58 to 64 are carried out N-1 times to build up the N levels of the analysis pyramidal structure 28, steps 42 to 48 being employed to build up the first level. In the same way, steps 76 to 80 of the decoding process are performed N-1 times to build up the N level of the synthesis pyramidal structure 30. Steps 71 B to 75A are performed one time.

When frames with a lower level of accuracy can be used for a specific utilization, reconstructed frames having a level of decomposition higher than 0 can be picked up from the decoding process before the end of the process.

According to another embodiment of the invention, the coding and the decoding processes are performed on groups of frames including 2N original frames for a number N of level of temporal decomposition superior to 2.

In the above description, the predict step is followed by the update step. However, the predict step can be advantageously performed simultaneously to the update step in order to use less memory spaces.

The decoding process allows to decode an initial GOF comprising $2^N+N+1$ coded frames obtained from the coding of an initial GOF comprising $3 \times 2^N-1$ original frames.

According to particular embodiments of the invention, the temporal coding process comprises the following features:

- Step c) comprises the following sub-steps:

    - c1) estimating 42, 58 at least one motion field MF between at least two frames $A_k$, $B_k$, $L_0$ of the selected group of frames 34, 53;
    - c2) generating 44, 60 at least one motion compensation operator (MC) and at least one inverse motion compensation operator IMC from the or each motion field MF estimated;
    - c3) computing 46, 62 at least one high frequency frame $H_0$, $H_k$ $LH_0$, $LH_k$ using at least two frames $A_k$, $B_k$, $L_0$, $L_k$ of the selected group of frames 34, 53 and using the or each motion compensation operator MC generated; and
    - c4) computing 46, 62 at least one low frequency frame $L_0$, $L_k$ $LL_0$, $LL_k$ using at least one high frequency frame $H_0$, $H_k$ $LH_0$, $LH_k$, using at least one frame $A_k$, $B_k$, $L_0$, $L_k$ of the selected group of frames 34, 53 and using the or each inverse motion compensation operator IMC.

- 2 x N frames are selected at step ii).
- The frames selected at step ii) comprise the last original frame 36, the last high frequency frame $LH_k$ of the level N of temporal decomposition, the last low frequency frame $L_k$ as well as the last high frequency frame $H_k$ of each level n of temporal decomposition.
- The frames defined as being the coded frames during step g) 66 of the functioning phase 51 comprise the last high $LH_k$ and the last low $LL_k$ frequency frames of the level N of temporal decomposition computed for the current group of frames 53 and $2^{N-n}$ high frequency frames $H_k$ from the second frame computed for the previous group of frames 34 of each level n of temporal decomposition.

According to a particular embodiment of the invention, the temporal decoding process comprises the following features:

- Step c) comprises the following sub-steps:

  - c1) receiving 71 A at least one motion field MF;
  - c2) generating 78 at least a motion compensation operator MC and at least a inverse motion compensation operator IMC from the motion field MF; and
  - c3) reconstructing 78 at least one low frequency frame $L_0$ and at least one original frame $A_k$, $B_k$ using coded frames of the selected group of frames 77, the or each motion compensation operator MC and the or each inverse motion compensation operator IMC; the selected group of frames 77 comprising at least one high frequency frame $H_0$, $H_k$, $LH_0$, $LH_k$ and at least one low frequency frame $LL_0$, $LL_k$.

- The frames of the current group of frames 84 selected at step i) comprise one low frequency frame $L_0$, $L_k$ of the level N of temporal decomposition and $2^{N-n}$ high frequency frames $LH_0$, $LH_k$, $H_0$, $H_k$, $A_0$, $A_k$ of each level n of temporal decomposition.
- The frames selected at step ii) comprise the last low frequency frame Lk, the last original frame $A_0$, $A_k$ and the last high frequency frame $H_0$, $H_k$ of each level n of temporal decomposition.

## Claims

1. Temporal coding process of a video sequence (5) in the form of a bit stream (7) to be transmitted to a decoder (16), the video sequence (5) comprising a succession of original frames ($A_k$, $B_k$) temporally placed one after another according to a predefined order, the temporal coding process comprising a functioning phase (51) comprising the following successive steps:

   a) selecting (52) at least one group of frames (53) in the video sequence (5), the selected group of frames (53) including $2^N$ original frames ($A_k$, $B_k$), N being an integer;
   b) setting a level n of temporal decomposition equal to 0;
   c) computing (62) frames ($L_0$, $L_k$, $H_0$, $H_k$) from the frames of the selected group of frames (53), the computation being performed successively following the order of the frames in the selected group of frames (53);
   d) selecting a group of frames among the computed frames ($L_0$, $L_k$);
   e) incrementing the level n of temporal decomposition from 1 unit;
   f) repeating (49, 65) steps c) to e) until the level n of temporal decomposition is equal to N;
   g) coding (50B, 66B) in the form of a bit stream (7) at least one frame ($L_0$, $L_k$, $H_0$, $H_k$, $LH_0$, $LH_k$, $LL_0$, $LL_k$) computed at step c) ;

   **characterised in that** it comprises an initial phase (33) comprising a step of selecting (32) an initial group of frames (34) in the video sequence (5), the initial group of frames (34) including $3 \times 2^N$-1 original frames ($A_k$, $B_k$), and a step of performing steps b) to g) on this initial group of frames (34).

2. Temporal coding process according to claim 1, **characterised in that** it comprises a step (67) of repeating steps a) to g) until the selection of the last frame (68) of the video sequence (5), each group of frames (34, 53) selected at step a) being placed one after another in the video sequence (5), the group of frames selected at one iteration being defined as a current group of frames (53), the group of frames selected at the preceding iteration being defined as a previous group of frames (34); and **in that** step a) comprises the following sub-steps :

   i) selecting (52) the current group of frames (53), the current group of frames (53) including $2^N$ original frames ($A_k$, $B_k$); and
   ii) selecting (38, 48, 54, 64) at least one original frame (36) of the previous group of frames (34) and one frame ($H_4$, $H_k$, $L_4$, $L_k$, $LH_1$, $LH_4$) computed from the original frames of the previous group of frames (34), the previous group of frames (34) being the initial group of frames (34) when step a) is performed for the first time.

3. Temporal coding process according to any of claims 1 and 2, **characterised in that** $2^N$+ N +1 frames are coded at step g) of the initial phase (33).

4. Temporal coding process according to any of claims 1 to 3, **characterised in that** step c) comprises a sub-step of computing at least one high frequency frame ($H_0$, $H_k$, $LH_0$, $LH_k$) from at least two frames ($A_k$, $B_k$, $L_0$, $L_k$) of the selected group of frames (34, 53) and a sub-step of computing (46, 62) at least one low frequency frame ($L_0$, $L_k$, $LL_0$, $LL_k$) from at least one high frequency frame ($H_0$, $H_k$, $LH_0$, $LH_k$) and at least one frame ($A_0$, $B_k$, $L_0$, $L_k$) of the selected group of frames (34, 53); and **in that** the frames coded at step g) (50A) of the initial phase (33) comprise the two high frequency frames and the two low frequency frames ($LH_0$, $LH_k$, $LL_0$, $LL_k$,) of the level N of temporal decomposition as well as the first ($2^{N-n}+1$ ) high frequency frames ($H_0$, $H_k$) of each level n of temporal decomposition.

5. Temporal coding process according to claim 4, **characterised in that** $3 \times 2^{N-n}$ -1 high frequency frames ($H_0$, $H_k$, $LH_0$, $LH_k$) and $3 \times 2^{N-n}$ -1 low frequency frames ($L_0$, $L_k$, $LL_0$, $LL_k$) are computed at each level n of temporal decomposition at each step c) of the initial phase (33).

6. Temporal coder (2) of a video sequence (5) arising in the form of a bit stream (7) to be transmitted to a decoder (16), the video sequence (5) comprising a succession of original frames ($A_k$, $B_k$) temporally placed one after another according to a predefined order, the temporal coder (2) comprises:

   - a control unit (6) being able to select at least a group of frames (53) in the video sequence (5), the selected group of frames (53) including $2^N$ original frames ($A_k$, $B_k$), N being an integer;
   - at least one computing unit (12, 14) adapted to compute successively N times frames ($L_0$, $L_k$, $H_0$, $H_k$) from the frames of the selected group of frames (53), following the frames order in the video sequence (5);
   - the control unit (6) being able to select a group of frames among the computed frames ($L_0$, $L_k$, $H_0$, $H_k$) generated by the or each computing unit (12, 14);
   - a coder block (9) being able to code at least one computed frame ($L_0$, $L_k$, $H_0$, $H_k$, $LH_0$, $LH_k$, $LL_0$, $LL_k$) in the form of a bit stream (7);

   **characterised in that** the control unit (6) is adapted to select an initial group of frames (34) including $3 \times 2^N$-1 original frames ($A_k$, $B_k$) during an initial phase (33) and **in that** the computing unit (12, 14) is adapted to compute the selected frames of the initial group of frames (34, 53).

7. Temporal decoding process of a bit stream (7) representing a coded video sequence comprising a succession of coded frames ($LL_0$, $LL_k$, $LH_0$, $LH_k$, $H_0$, $H_k$) temporally placed one after another according to a predefined order, the process comprising a functioning phase (76A) comprising the following successive steps:

   a) decoding (71A) the bit stream (7) to obtain decoded frames of a decoded video sequence;
   b) selecting (76) at least one group of frames (77) in the decoded video sequence, the selected group of frames (77) including $2^N$ decoded frames, N being an integer;
   c) setting a level n of temporal decomposition equal to N;
   d) reconstructing (78) frames ($L_0$) from the frames ($LL_0$, $LL_k$, $LH_0$, $LH_k$, $H_0$, $H_k$) of the selected group of frames (77), the reconstructing being performed successively following the order of the frames in the selected group of frames (77);
   e) selecting (78) a group of frames among the reconstructed frames ($L_0$, $L_k$);
   f) decrementing the level n of temporal decomposition from 1 unit;
   g) repeating (78) step d) to f) until the level n of temporal decomposition equal to 0, at least one frame ($A_k$, $B_k$) reconstructed at step d) being an original frame ($A_k$, $B_k$) of the video sequence (5);
   **characterised in that** it comprises after step a), an initial phase (70) comprising a step of selecting (71 B) an initial group of frames (72) in the decoded video sequence, the initial group of frames (72) including $2^N$+N+1 decoded frames ($L_0$, $L_k$, $LH_0$, $LH_k$, $H_0$, $H_k$), and a step of performing steps c) to g) on this initial group of frames (72).

8. Temporal decoding process according to claim 7, **characterised in that** it comprises a step (82) of repeating steps b) to g) until the selection of the last frame ($H_7$, $H_k$) of the decoded video sequence, each group of frames selected (77, 84) at step b) being temporally placed one after another in the decoded video sequence, the group of frames selected at one iteration being defined as a current group of frames (84), the group of frames selected at the preceding iteration being defined as the previous group of frames (77); and **in that** step b) comprises the following sub-steps:

   i) selecting (76) a current group of frames (84), the selected group of frames (53) including $2^N$ decoded frames;

and

ii) selecting (75) at least one decoded frame of a previous group of frames (77) and at least one frame (4', 8', 12') reconstructed from the decoded frames of the previous group of frames (77), the previous group of frames (77) being the initial group of frames (72) when step b) is performed for the first time.

9. Temporal decoding process according to any of claims 7 and 8, **characterised in that** step d) comprises a sub-step of reconstructing at least one low frequency frame ($L_0$, $L_k$) and least one original frame ($A_k$, $B_k$) from the decoded frames of the selected group of frames (77); the selected group of frames (77) comprising at least one high frequency frame ($H_0$, $H_k$, $LH_0$, $LH_k$) and at least one low frequency frame ($LL_0$, $LL_k$); and **in that** the frames of the initial group of frames (72) selected during the initial phase (70) comprise two low frequency frames ($LL_0$, $LL_k$) of the level N of temporal decomposition and $2^{N-n}+1$ high frequency frames ($H_0$, $H_k$, $LH_0$, $LH_k$) of each level n of temporal decomposition.

10. Temporal decoder (16) of a bit stream (7) representing a coded video sequence comprising a succession of coded frames ($A_k$, $B_k$) temporally placed one after another according to a predefined order, **characterised in that** the decoder (16) comprises:

- a decoder block (19) adapted to decode the bit stream (7) to obtain decoded frames of a decoded video sequence;
- a control unit (20) able to select at least a group of frames (77, 84), the group of frames (77, 84) including $2^N$ decoded frames, N being an integer;
- at least one reconstructing unit (24, 26) adapted to reconstruct successively frames ($L_0$, $L_k$) from the frames of the selected group of frames, following the frames order in the selected group of frames ;
- the control unit (20) being able to select a group of frames among the reconstructed frames ($L_0$, $L_k$) generated by the or each reconstructing unit (24, 26), the or each reconstructing unit (24, 26) being able to compute N times the frames of the selected group of frames, at least one reconstructed frame being an original frame of the video sequence (5);

**characterised in that** the control unit (20) is adapted to select an initial group of frames (72) including $2^N + N + 1$ decoded frames during an initial phase (70).

$A_{k-1}$  $B_{k-1}$  $A_k$  $B_k$  $A_{k+1}$

video
sequence

$A_{k-1}$  $B_{k-1}$  $A_k$  $B_k$  $A_{k+1}$

MC  MC  MC  MC    *Predict*

1    -1    ·½    -½

high-pass
frames

$H_{k-1}$  $H_k$    $H_k$

$H_{k-1}$

IMC  IMC    *Update*

1    ¼

low-pass
frames

$L_k$    $L_k$

# FIG.1

## FIG.2

EP 1 978 744 A1

FIG.3

FIG.4

EP 1 978 744 A1

FIG.5

```
┌─────────────────────────────────┐
│      Selecting an initial GOF   │──── 32  ┐
└─────────────────────────────────┘         │
                 │                           │
                 ▼                           │
┌─────────────────────────────────┐         │
│         Selecting frame         │──── 38  │
└─────────────────────────────────┘         │
                 │                           │
                 ▼                           │
┌─────────────────────────────────┐         │
│      Estimating motion fields   │──── 42  │
└─────────────────────────────────┘         │
                 │                           │
                 ▼                           │
┌─────────────────────────────────┐         │
│  Generating motion compensated frames │─ 44    │ 33
└─────────────────────────────────┘         │
                 │                           │
                 ▼                           │
┌─────────────────────────────────┐         │
│        Computing  frames        │──── 46  │
└─────────────────────────────────┘         │
                 │                           │
                 ▼                           │
┌─────────────────────────────────┐         │
│      Selecting HF &LF frames    │──── 48  │
└─────────────────────────────────┘         │
                 │                           │
                 ▼                           │
┌─────────────────────────────────┐         │
│     Selecting frames to be coded │─── 50A  │
└─────────────────────────────────┘         │
                 │                           │
                 ▼                           │
┌─────────────────────────────────┐         │
│   Coding frames in a bit stream │──── 50B ┘
└─────────────────────────────────┘
                 │                           ┐
                 ▼                           │
┌─────────────────────────────────┐         │
│      Selecting a current GOF    │──── 52  │
└─────────────────────────────────┘         │
                 │                           │
                 ▼                           │
┌─────────────────────────────────┐         │
│         Selecting frame         │──── 54  │
└─────────────────────────────────┘         │
                 │                           │
                 ▼                           │
┌─────────────────────────────────┐         │
│      Estimating motion fields   │──── 58  │
└─────────────────────────────────┘         │
                 │                           │
                 ▼                           │
┌─────────────────────────────────┐         │  51
│  Generating motion compensated frames │─ 60    │
└─────────────────────────────────┘         │
                 │                           │
                 ▼                           │
┌─────────────────────────────────┐         │
│  Computing  frames using selected frame │ 62  │
└─────────────────────────────────┘         │
                 │                           │
                 ▼                           │
┌─────────────────────────────────┐         │
│      Selecting HF & LF frames   │──── 64  │
└─────────────────────────────────┘         │
                 │                           │
                 ▼                           │
┌─────────────────────────────────┐         │
│     Selecting frames to be coded │─── 66A  │
└─────────────────────────────────┘         │
                 │                           │
                 ▼                           │
┌─────────────────────────────────┐         │
│   Coding frames in a bit stream │──── 66B  │
└─────────────────────────────────┘         │
                 │                           │
                 ▼                           │
┌─────────────────────────────────┐         │
│              End                │──── 69  ┘
└─────────────────────────────────┘
```

49

65

67

FIG.6

EP 1 978 744 A1

5    34    36    53    55

| 4' | 5' | 6' | 7' | 8' | 9' | 10' | 11' | 12' | 13' | 14' | ← Level 0 |

$H_2$   $H_3$   $H_4$   $H_5$   $H_6$    ← Level 1

$L_2$   $L_3$   $L_4$   $L_5$   $L_6$

$LH_1$    $LH_2$    ← Level 2

$LL_1$    $LL_2$

$LL_1$    $LL_2$    ← Level 2

$LH_1$    $LH_2$    77

$L_2$   $L_3$   $L_4$    ← Level 1

$H_2$   $H_3$   $H_4$    77

| 4' | 5' | 6' | 7' | 8' | ← Level 0 |

5    74    78

28    30

FIG.7

FIG.8

FIG.9

```
┌──────────────────────────────────────────────┐
│      Receiving and decoding the bit stream     │───71A
└──────────────────────────────────────────────┘
                      │
        ┌──────────────────────────────────────────────┐
        │           Selecting an initial GOF             │───71B
        └──────────────────────────────────────────────┘
                      │
70 ┤    ┌──────────────────────────────────────────────┐
        │               Filtering frames                 │───73
        └──────────────────────────────────────────────┘
                      │
        ┌──────────────────────────────────────────────┐
        │          Selecting a group of frames           │───75
        └──────────────────────────────────────────────┘
                      │
        ┌──────────────────────────────────────────────┐
        │             Selecting a current GOF            │───76
        └──────────────────────────────────────────────┘
                      │
82 ┤    ┌──────────────────────────────────────────────┐          76A
        │    Reconstructing  frames using selected frames │───78
        └──────────────────────────────────────────────┘
                      │
        ┌──────────────────────────────────────────────┐
        │          Selecting a group of frames           │───80
        └──────────────────────────────────────────────┘
                      │
              ┌──────────────────────────┐
              │            End             │───86
              └──────────────────────────┘
```

# FIG.10

**European Patent Office**

## EUROPEAN SEARCH REPORT

Application Number

EP 07 29 0410

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 599 046 A (THOMSON LICENSING [FR]) 23 November 2005 (2005-11-23) * paragraphs [0015] - [0017] * * paragraphs [0037] - [0045] * * paragraphs [0060] - [0064] * * paragraph [0067]; figures 4-10 * ----- | 1-10 | INV. H04N7/26 H04N7/36 |
| X | GOLWELKAR A ET AL: "Motion compensated temporal filtering using longer filters, ISO/IEC JTC1/SC29/WG11 MPEG2002/M9280" ISO/IEC JTC1/SC29/WG11 MPEG2002/M9280, XX, XX, December 2002 (2002-12), pages 1-13, XP002293277 * abstract * Chapter 2.5; figure 3 ----- | 1-10 | |
| X | SCHWARZ H ET AL: "Technical Description of HHI Proposal for SVC CE3" ISO/IEC JTC1/SC29/WG11 MPEG2004 M11246, XX, XX, October 2004 (2004-10), pages 1-13, XP002329593 * pages 1-2; figures 1-7 * ----- | 1-10 | |
| X | EP 1 675 401 A (THOMSON LICENSING [FR]) 28 June 2006 (2006-06-28) * abstract * * paragraphs [0019], [0020] * * figure 4 * ----- | 1-10 | TECHNICAL FIELDS SEARCHED (IPC) H04N |

The present search report has been drawn up for all claims

| Place of search | Date of completion of the search | Examiner |
|---|---|---|
| Munich | 29 August 2007 | Lindgren, Johan |

EPO FORM 1503 03.82 (P04C01)

## ANNEX TO THE EUROPEAN SEARCH REPORT
## ON EUROPEAN PATENT APPLICATION NO.

EP 07 29 0410

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2007

| Patent document cited in search report | | Publication date | Patent family member(s) | | Publication date |
|---|---|---|---|---|---|
| EP 1599046 | A | 23-11-2005 | WO | 2005112466 A1 | 24-11-2005 |
| EP 1675401 | A | 28-06-2006 | WO | 2006067049 A1 | 29-06-2006 |

For more details about this annex : see Official Journal of the European Patent Office, No. 12/82